# FASCICULE DE BREVET EUROPEEN

(11) **EP 1 798 109 B1**
(45) Date de publication et mention de la délivrance du brevet: **27.02.2008**
(21) Numéro de dépôt: 06301060.7
(22) Date de dépôt: 19.10.2006
(51) Int. Cl.: B60R 7/06, B60R 21/045

(54) **Agencement de planche de bord comportant une bande décorative concave**
Armaturenbrettanordnung mit einer konkaven Zierleiste
Dashboard arrangement with a concave decorative strip

(30) Priorité: 13.12.2005 FR 0553842
(43) Date de publication de la demande: 20.06.2007
(73) Titulaire: RENAULT S.A.S., 92100 Boulogne Billancourt (FR)
(72) Inventeur: Le-Leizour, Alban, 78580 MAULE (FR); Prenel, Frédéric, 78830 BULLION (FR); Marceau, Thierry, 92500 Rueil-Malmaison (FR)

(56) Documents cités:
- FR-A- 2 793 743
- FR-A- 2 819 765
- US-A- 4 355 837
- PATENT ABSTRACTS OF JAPAN vol. 007, no. 016 (M-187), 22 janvier 1983 (1983-01-22) -& JP 57 172843 A (SUZUKI JIDOSHA KOGYO KK), 23 octobre 1982 (1982-10-23)

## Description

L'invention concerne un agencement de planche de bord d'un véhicule automobile.

L'invention concerne plus particulièrement un agencement pour une planche de bord d'un véhicule automobile, dans lequel la planche de bord comporte une partie supérieure et une partie inférieure comportant une boîte à gants qui est munie d'un bac de rangement qui est venu de matière avec la planche de bord, dont au moins un bord supérieur est adjacent à la partie supérieure, et qui est fermé par une porte articulée sur la planche de bord, du type dans lequel la partie supérieure porte une bande décorative sensiblement transversale dont un bord inférieur est adjacent avec un bord supérieur de la porte de la boîte à gants lorsqu'elle est fermée.

On connaît de nombreux exemples d'agencements de ce type.

Il s'agit pour la plupart d'agencements dans lequel la bande, qui est ajustée avec le bord supérieur de la porte de la boîte à gants lorsqu'elle est fermée, ne remplit qu'une fonction décorative.

Or, l'utilisation d'une telle bande décorative peut être avantageusement mise à profit pour associer la bande à un certains nombre de fonctions techniques.

Une telle bande du type décrit précédemment peut notamment être utilisée pour dissimuler un équipement de sécurité du véhicule ou un élément d'aménagement intérieur du véhicule.

Dans ce but, l'invention propose un agencement du type décrit précédemment, caractérisé en ce que la bande est sensiblement concave et délimite une cavité dans laquelle est agencée une entretoise concave, qui est interposée entre la partie supérieure et la bande, et dont une cavité communique avec le bac de rangement pour augmenter le volume de la boîte à gants.

La bande décorative, côté passager de la planche de bord peut consister en toute pièce d'habillage visible par les passagers et s'étendant à partir du bord supérieur de la boîte à gants lorsque celle-ci est fermée, vers le haut jusqu'au pare-brise.

Selon d'autres caractéristiques de l'invention :
- la bande est d'une rigidité réduite déterminée, et l'entretoise est déformable pour former un élément d'absorption d'énergie susceptible d'absorber lors d'un choc l'énergie cinétique des genoux d'un passager assis en regard de la boîte à gants,
- la partie supérieure de la planche de bord comporte un fronton de fixation, qui est délimité par le bord supérieur du bac de rangement, qui comporte au moins une face sensiblement verticale de fixation, et en ce que la bande comporte une pluralité de pattes qui s'étendent longitudinalement à partir d'un face interne de sa cavité, et dont chacune comporte une extrémité plane qui est destinée à prendre appui sur la face verticale de fixation du fronton et à partir de laquelle fait saillie un pion qui est destiné à s'emboîter dans un perçage correspondant pratiqué dans la face de fixation du fronton,
- l'entretoise comporte un bord supérieur qui comporte une pluralité de moyens de fixation d'orientation parallèle à la face de fixation du fronton, qui comportent chacun un perçage de diamètre correspondant au perçage recevant les pions, pour permettre l'interposition de l'entretoise entre la bande et le fronton,
- l'entretoise comporte une paroi concave dont un bord supérieur comporte les moyens de fixation sur le fronton et dont le bord inférieur rejoint le bord inférieur de la bande,
- la bande comporte une paroi incurvée en forme de gouttière d'orientation transversale, qui délimite la cavité dans laquelle est reçue l'entretoise, dont la face interne porte les pattes longitudinales, et dont le bord inférieur est adjacent avec le bord supérieur de la porte de la boîte à gants lorsqu'elle est fermée,
- l'extrémité supérieure de la porte de la boîte à gants comporte un verrou dont un pêne en forme de crochet, monté sélectivement pivotant autour d'un axe (A) transversal, est destiné à traverser une encoche de dimension correspondante de la bande et à coopérer avec le bord inférieur de l'entretoise pour verrouiller la porte de la boîte à gants.

D'autres caractéristiques et avantages de l'invention apparaîtront à la lecture de la description détaillée qui suit pour la compréhension de laquelle on se reportera aux dessins annexés dans lesquels :
- la figure 1 est une vue d'ensemble en perspective d'un agencement selon l'invention ;
- la figure 2 est une vue en coupe longitudinale de l'agencement de la figure 1 représentant la boîte à gants ouverte ;
- la figure 3 est une vue en coupe longitudinale de l'agencement de la figure 1 représentant la boîte à gants fermée.

Dans la description qui va suivre, des chiffres de référence identiques désignent des pièces identiques ou ayant des fonctions similaires.

On a représenté sur les figures l'ensemble d'un agencement 10 pour une planche de bord 12 d'un véhicule automobile.

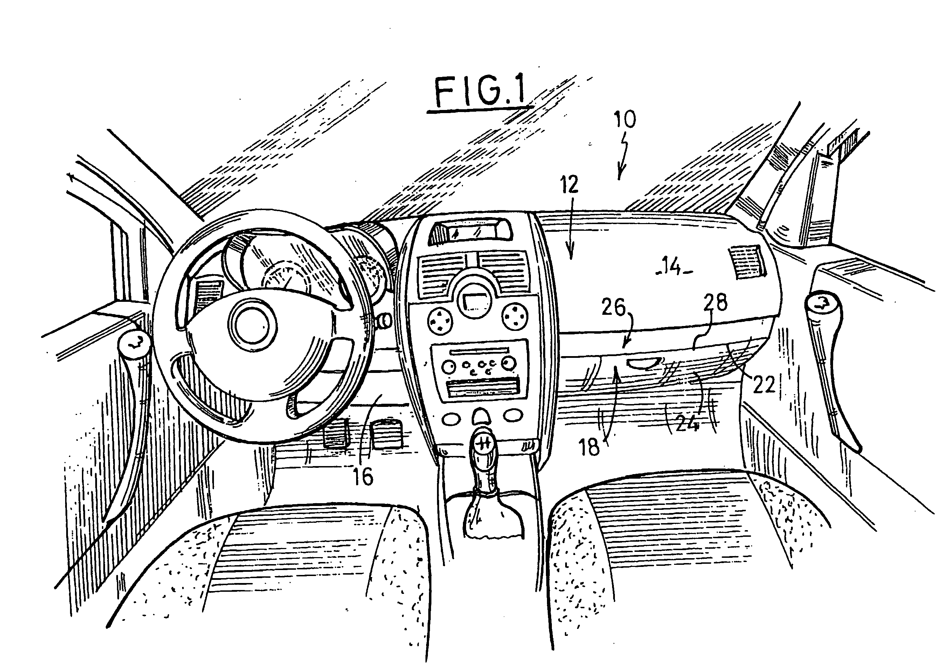

De manière connue, comme l'illustre la figure 1, la planche de bord 12 comporte une partie supérieure 14 et une partie inférieure 16 comportant une boîte à gants 18 qui est constituée d'un bac 20 de rangement qui est venu de matière avec la planche de bord 12, dont au moins un bord supérieur 22 est adjacent à la partie supérieure 14, et qui est fermé par une porte 24 articulée sur la planche de bord 12.

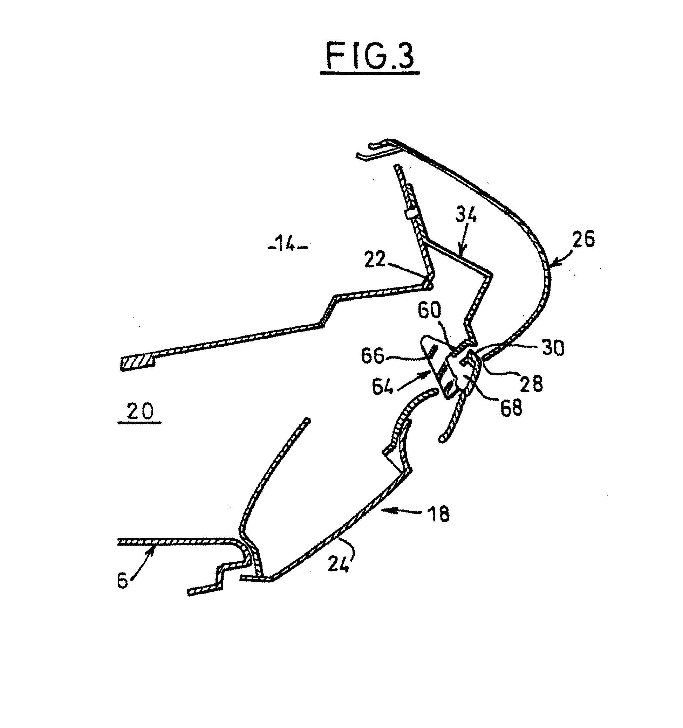

De manière connue, la partie supérieure 14 de la planche de bord 12 porte une bande décorative 26 sensiblement transversale dont un bord inférieur 28 est adjacent avec un bord supérieur 30 de la porte 24 de la boîte à gants 18 lorsque celle-ci est fermée, comme représenté à la figure 3.

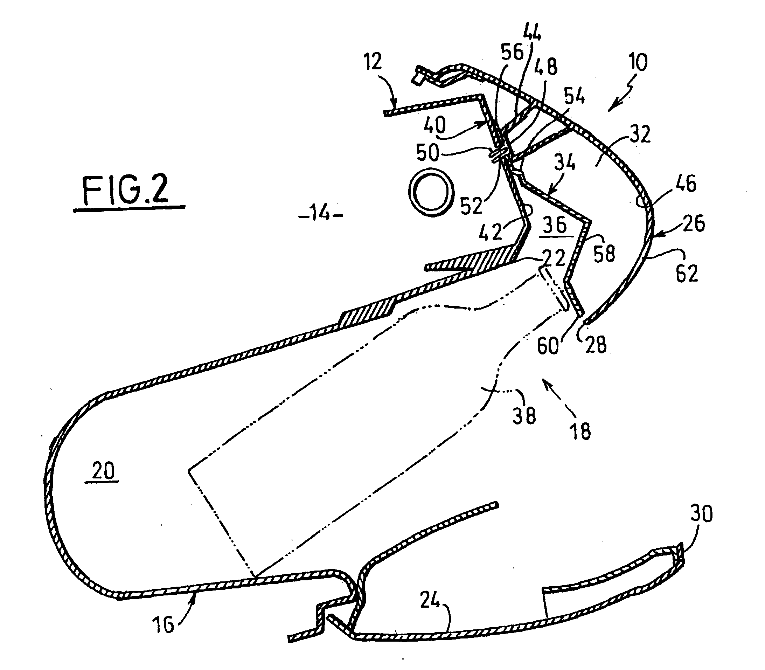

Conformément à l'invention, comme l'illustrent les figures 2 et 3, la bande 26 est sensiblement concave et délimite une cavité 32 dans laquelle est agencée une entretoise concave 34, qui est interposée entre la partie supérieure 14 et la bande 26 et dont une cavité 36 communique avec le bac 20 de rangement pour augmenter le volume de la boîte à gants 18.

Cette configuration permet de tirer parti avantageusement de la présence de la bande 26 pour agrandir vers le haut et vers l'arrière le volume utilisable de la boîte à gants 18 sans augmenter celui du bac 20.

Ainsi la boîte à gants 18 peut-elle recevoir des objets encombrants comme la bouteille 38 qui a été représentée à la figure 2.

Par ailleurs, une autre caractéristique essentielle de l'invention est que la bande 26 est d'une rigidité réduite déterminée, et l'entretoise 34 est déformable pour former un élément d'absorption d'énergie susceptible d'absorber lors d'un choc l'énergie cinétique des genoux (non représentés) d'un passager assis en regard de la boîte à gants 18.

Dans le mode de réalisation préféré de l'invention, la partie supérieure 14 de la planche 12 de bord comporte un fronton 40 de fixation, qui est délimité par le bord supérieur 22 du bac 20 de rangement et qui comporte au moins une face 42 sensiblement verticale de fixation.

La bande 26 est fixée sur ce fronton 40 de fixation. A cet effet, la bande 26 comporte une pluralité de pattes 44 qui s'étendent longitudinalement à partir d'un face interne 46 de sa cavité 32. Chaque patte 44 comporte une extrémité plane 48 qui est destinée à prendre appui sur la face verticale 42 de fixation du fronton 40 et à partir de laquelle fait saillie un pion 50 qui est destiné à s'emboîter dans un perçage 52 correspondant pratiqué dans la face 42 de fixation du fronton 40.

Avantageusement, la bande 26 est réalisée en un matériau plastique et les pattes 44 de fixation sont venues de matière avec le matériau de ladite bande 26.

Pour permettre l'interposition de l'entretoise 34 entre le fronton 40 et la bande 26, l'entretoise 34 comporte un bord supérieur 54 qui comporte une pluralité de moyens 56 de fixation.

A titre d'exemple, le bord supérieur 54 comporte une pluralité de pattes 56 planes, d'orientation parallèle à la face de fixation du fronton, qui comportent chacune un perçage de diamètre correspondant au perçage 52 recevant les pions 50.

Pour réaliser la cavité 36 de l'entretoise 34, celle-ci comporte une paroi concave 58 qui délimite sa cavité 36. La paroi concave 58 comporte le bord supérieur 54 qui comporte les moyens 56 de fixation constitué des pattes 56 planes et elle comporte un bord inférieur 60 qui rejoint le bord inférieur 28 de la bande 26 pour fermer l'espace délimité entre l'entretoise 34 et la bande 26.

La bande 26, quand à elle, comporte une paroi 62 incurvée en forme de gouttière d'orientation transversale, qui délimite la cavité 32 dans laquelle est reçue l'entretoise 26, dont la face interne 46 porte les pattes 44 longitudinales, et dont le bord inférieur 28 est adjacent avec le bord supérieur 30 de la porte 24 de la boîte à gants 18 lorsqu'elle est fermée.

Avantageusement, l'entretoise 26 participe aussi à la fermeture de la boîte à gants 18. En effet, comme l'illustre la figure 3, l'extrémité supérieure 30 de la porte 24 de la boîte à gants 18 comporte un verrou 64 dont un pêne 66 en forme de crochet, monté sélectivement pivotant autour d'un axe "A" transversal, est destiné à traverser une encoche 68 de dimension correspondante de la bande 26 et à coopérer avec le bord inférieur 60 de l'entretoise 26 pour verrouiller la porte 24 de la boîte à gants 18.

## Revendications

1. Agencement (10) de planche de bord (12) d'un véhicule automobile, dans lequel la planche (12) de bord comporte une partie supérieure (14) et une partie inférieure (16) comportant une boîte à gants (18) qui est munie d'un bac (20) de rangement qui est venu de matière avec la planche de bord (20), dont au moins un bord supérieur (22) est adjacent à la partie supérieure (14), et qui est fermé par une porte (24) articulée sur la planche de bord (12), du type dans lequel la partie supérieure (14) porte une bande décorative (26) sensiblement transversale dont un bord inférieur (28) est adjacent avec un bord supérieur (30) de la porte (24) de la boîte à gants (18) lorsqu'elle est fermée,
**caractérisé en ce que** la bande (26) est sensiblement concave et délimite une cavité (32) dans laquelle est agencée une entretoise concave (34), qui est interposée entre la partie supérieure (14) et la bande (26) et dont une cavité (36) communique avec le bac (20) de rangement pour augmenter le volume de la boîte à gants (18).

2. Agencement (10) selon la revendication précédente, **caractérisé en ce que** la bande (26) est d'une rigidité réduite déterminée, et **en ce que** l'entretoise (34) est déformable pour former un élément d'absorption d'énergie susceptible d'absorber lors d'un choc l'énergie cinétique des genoux d'un passager assis en regard de la boîte à gants (18).

3. Agencement (10) selon l'une quelconque des revendications précédentes, **caractérisé en ce que** la partie supérieure (14) de la planche de bord (12) comporte un fronton (40) de fixation, qui est délimité par le bord supérieur (22) du bac de rangement, qui comporte au moins une face (42) sensiblement verticale de fixation, et **en ce que** la bande (26) comporte une pluralité de pattes (44) qui s'étendent longitudinalement à partir d'un face interne (46) de sa cavité (32), et dont chacune comporte une extrémité plane (48) qui est destinée à prendre appui sur la face (42) verticale de fixation du fronton (40) et à partir de laquelle fait saillie un pion (50) qui est destiné à s'emboîter dans un perçage (52) correspondant pratiqué dans la face (42) de fixation du fronton (40).

4. Agencement (10) selon la revendication précédente, **caractérisé en ce que** l'entretoise (34) comporte un bord supérieur (54) qui comporte une pluralité de moyens de fixation (56) d'orientation parallèle à la face de fixation du fronton, qui comportent chacun un perçage de diamètre correspondant au perçage (52) recevant les pions (50), pour permettre l'interposition de l'entretoise (34) entre la bande (26) et le fronton (40).

5. Agencement (10) selon l'une quelconque des revendications 1 à 4, **caractérisé en ce que** l'entretoise (34) comporte une paroi concave (58) dont un bord supérieur (54) comporte les moyens de fixation (56) sur le fronton (40) et dont le bord inférieur (60) rejoint le bord inférieur (28) de la bande (26).

6. Agencement (10) selon l'une quelconque des revendications 3 ou 4, **caractérisé en ce que** la bande (26) comporte une paroi (62) incurvée en forme de gouttière d'orientation transversale, qui délimite la cavité (32) dans laquelle est reçue l'entretoise (34), dont la face interne (46) porte les pattes longitudinales (44), et dont le bord inférieur (28) est adjacent avec le bord supérieur (30) de la porte (24) de la boîte à gants (18) lorsqu'elle est fermée.

7. Agencement (10) selon l'une des revendications 5 ou 6, **caractérisé en ce que** l'extrémité supérieure (30) de la porte (24) de la boîte à gants (18) comporte un verrou (64) dont un pêne en forme de crochet, monté sélectivement pivotant autour d'un axe (A) transversal, est destiné à traverser une encoche (68) de dimension correspondante de la bande (26) et à coopérer avec le bord inférieur (60) de l'entretoise (34) pour verrouiller la porte (24) de la boîte à gants (18).

## Claims

1. Motor vehicle dashboard (12) arrangement (10) in which the dashboard (12) comprises an upper part (14) and a lower part (16) incorporating a glovebox (18) which is equipped with a storage binnacle (20) formed as an integral part of the dashboard (12), of which at least an upper edge (22) is adjacent to the upper part (14) and which is closed by a door (24) articulated to the dashboard (12), of the type in which the upper part (14) bears a substantially transverse decorative strip (26) a lower edge (28) of which is adjacent to an upper edge (30) of the door (24) of the glovebox (18) when it is closed,
**characterized in that** the strip (26) is substantially concave and delimits a cavity (32) in which there is positioned a concave spacer piece (34) which is interposed between the upper part (14) and the strip (26) and a cavity (36) of which communicates with the storage binnacle (20) in order to increase the capacity of the glovebox (18).

2. Arrangement (10) according to the preceding claim, **characterized in that** the strip (26) is of a determined low rigidity and **in that** the spacer piece (34) is deformable in order to form an energy absorbing element capable, in the event of an impact, of absorbing the kinetic energy of the knees of a passenger sitting facing the glovebox (18).

3. Arrangement (10) according to either one of the preceding claims, **characterized in that** the upper part (14) of the dashboard (12) comprises an attachment brace (40) which is delimited by the upper edge (22) of the storage binnacle, which comprises at least one substantially vertical attachment face (42), and **in that** the strip (26) comprises a plurality of tabs (44) running longitudinally from an internal face (46) of its cavity (32) and each of which has a flat end (48) which is intended to bear against the vertical attachment face (42) of the brace (40) and from which there projects a stud (50) which is intended to fit into a corresponding hole (52) made in the attachment face (42) of the brace (40).

4. Arrangement (10) according to the preceding claim, **characterized in that** the spacer piece (34) has an upper edge (54) which comprises a plurality of attachment means (56) orientated parallel to the attachment face of the brace, each comprising a hole of a diameter corresponding to the hole (52) that accepts the studs (50), so as to allow the spacer piece (34) to be inserted between the strip (26) and the brace (40).

5. Arrangement (10) according to any one of Claims 1 to 4, **characterized in that** the spacer piece (34) comprises a concave wall (58) of which an upper edge (54) comprises the means of attachment (56) to the brace (40) and of which the lower edge (60) meets the lower edge (28) of the strip (26).

6. Arrangement (10) according to either one of Claims 3 and 4, **characterized in that** the strip (26) comprises a transversely directed gutter-shaped curved wall (62) which delimits the cavity (32) in which the spacer piece (34) is accepted, of which the internal face (46) bears the longitudinal tabs (44) and of which the lower edge (28) is adjacent to the upper edge (30) of the door (24) of the glovebox (18) when it is closed.

7. Arrangement (10) according to one of Claims 5 and 6, **characterized in that** the upper end (30) of the door (24) of the glovebox (18) comprises a latch (64) of which a hook-shaped latch bolt, mounted such that it can pivot selectively about a transverse axis (A), is intended to pass through a correspondingly-sized cutout (68) in the strip (26) and to collaborate with the lower edge (60) of the spacer piece (34) in order to secure the door (24) of the glovebox (18).

## Patentansprüche

1. Anordnung (10) des Armaturenbretts (12) eines Kraftfahrzeugs, bei der das Armaturenbrett (12) einen oberen Teil (14) und einen unteren Teil (16) aufweist, der ein Handschuhfach (18) aufweist, das mit einem Ablagebehälter (20) versehen ist, der aus einem Stück mit dem Armaturenbrett (12) hergestellt ist, von dem mindestens ein oberer Rand (22) dem oberen Teil (14) benachbart ist, und das von einer Tür (24) verschlossen wird, die am Armaturenbrett (12) angelenkt ist, von dem Typ, bei dem der obere Teil (14) eine im Wesentlichen in Querrichtung verlaufende Zierleiste (26) trägt, von der ein unterer Rand (28) einem oberen Rand (30) der Tür (24) des Handschuhfachs (18) benachbart ist, wenn dieses geschlossen ist,
**dadurch gekennzeichnet, dass** die Leiste (26) im Wesentlichen konkav ist und einen Hohlraum (32) begrenzt, in dem ein konkaver Abstandshalter (34) angeordnet ist, der zwischen den oberen Teil (14) und die Leiste (26) eingefügt ist und von dem ein Hohlraum (36) mit dem Ablagebehälter (20) in Verbindung steht, um das Volumen des Handschuhfachs (18) zu vergrößern.

2. Anordnung (10) nach dem vorhergehenden Anspruch, **dadurch gekennzeichnet, dass** die Leiste (26) eine bestimmte reduzierte Steifheit hat, und dass der Abstandshalter (34) verformbar ist, um ein Energieabsorptionselement zu formen, das bei einem Stoß die kinetische Energie der Knie eines Insassen absorbieren kann, der vor dem Handschuhfach (18) sitzt.

3. Anordnung (10) nach einem der vorhergehenden Ansprüche, **dadurch gekennzeichnet, dass** der obere Teil (14) des Armaturenbretts (12) eine Befestigungs-Stirnwand (40) aufweist, die durch den oberen Rand (22) des Ablagebehälters begrenzt wird, die mindestens eine im Wesentlichen senkrechte Befestigungsseite (42) aufweist, und dass die Leiste (26) mehrere Laschen (44) aufweist, die sich in Längsrichtung ausgehend von einer Innenseite (46) ihres Hohlraums (32) erstrecken und von denen jede ein ebenes Ende (48) aufweist, das dazu bestimmt ist, auf der senkrechten Befestigungsseite (42) der Stirnwand (40) aufzuliegen und von dem aus ein Zapfen (50) vorsteht, der dazu bestimmt ist, sich in eine entsprechende Bohrung (52) einzufügen, die in der Befestigungsseite (42) der Stirnwand (40) ausgebildet ist.

4. Anordnung (10) nach dem vorhergehenden Anspruch, **dadurch gekennzeichnet, dass** der Abstandshalter (34) einen oberen Rand (54) aufweist, der mehrere Befestigungsmittel (56) mit einer Ausrichtung parallel zur Befestigungsseite der Stirnwand aufweist, die je eine Bohrung mit einem Durchmesser aufweisen, der der Bohrung (52) entspricht, die die Zapfen (50) aufnimmt, um die Zwischenfügung des Abstandshalters (34) zwischen die Leiste (26) und die Stirnwand (40) zu ermöglichen.

5. Anordnung (10) nach einem der Ansprüche 1 bis 4, **dadurch gekennzeichnet, dass** der Abstandshalter (34) eine konkave Wand (58) aufweist, deren oberer Rand (54) die Befestigungsmittel (56) an der Stirnwand (40) aufweist und deren unterer Rand (60) an den unteren Rand (28) der Leiste (26) anschließt.

6. Anordnung (10) nach einem der Ansprüche 3 oder 4, **dadurch gekennzeichnet, dass** die Leiste (26) eine gekrümmte Wand (62) in Form einer Rinne mit Querausrichtung aufweist, die den Hohlraum (32) begrenzt, in dem der Abstandshalter (34) aufgenommen wird, deren Innenseite (46) die Längslaschen (44) trägt, und deren unterer Rand (28) dem oberen Rand (30) der Tür (24) des Handschuhfachs (18) benachbart ist, wenn es geschlossen ist.

7. Anordnung (10) nach einem der Ansprüche 5 oder 6, **dadurch gekennzeichnet, dass** das obere Ende (30) der Tür (24) des Handschuhfachs (18) eine Verriegelung (64) aufweist, von der ein Riegel in Form eines Hakens, der selektiv schwenkend um eine Querachse (A) montiert ist, dazu bestimmt ist, eine Aussparung (68) von entsprechender Abmessung der Leiste (26) zu durchqueren und mit dem unteren Rand (60) des Abstandshalters . (34) zusammenzuwirken, um die Tür (24) des Handschuhfachs (18) zu verriegeln.
